# NEW EUROPEAN PATENT SPECIFICATION

(11) **EP 2 692 876 B2**
(45) Date of publication and mention of the opposition decision: **05.01.2022**
(45) Mention of the grant of the patent: 20.03.2019
(21) Application number: 12762964.0
(22) Date of filing: 28.03.2012
(51) Int. Cl.: C22C 9/00, C22C 32/00, F16D 69/02

(54) **SINTERED FRICTION MATERIAL FOR HIGH-SPEED RAIL**
SINTERREIBWERKSTOFF FÜR HOCHGESCHWINDIGKEITSSCHIENEN
MATÉRIAU DE FROTTEMENT FRITTÉ POUR RAIL À GRANDE VITESSE

(30) Priority: 30.03.2011 JP 2011075343
(43) Date of publication of application: 05.02.2014
(73) Proprietor: Nippon Steel Corporation, Tokyo 100-8071 (JP)
(72) Inventor: ISHIMOTO, Fumio, Osaka-shi Osaka 541-0041 (JP); KATSUKI, Futoshi, Osaka-shi Osaka 541-0041 (JP); ASABE, Kazutaka, Osaka-shi Osaka 541-0041 (JP); KANDA, Osamu, Osaka-shi Osaka 541-0041 (JP)
(74) Representative: Zimmermann & Partner Patentanwälte mbB
(86) International application number: PCT/JP2012/058102
(87) International publication number: WO 2012/133513

(56) References cited:
- FR-A- 1 502 916
- JP-A- 10 226 842
- JP-A- 10 287 941
- JP-A- 2000 328 171
- JP-A- 2006 016 680
- US-A- 2 408 430
- US-A- 2 945 291
- US-A- 3 191 278
- US-A- 4 855 336
- US-A1- 2009 008 210
- T Miyauchi ET AL: "RELATIONSHIP BETWEEN WEAR PERFORMANCE AND SOLID LUBRICANTS IN SINTERED FRICTION MATERIALS", Proceedings of WTC2005-63467, World Tribology Congress, 12 September 2005 (2005-09-12), pages 1-2, XP055344051, Retrieved from the Internet: URL:http://www2.eng.cam.ac.uk/~mpfs/papers /articles/WTC2005/pdfs/t-1/WTC2005-63467.p df [retrieved on 2017-02-09]
- Anonymous: "High-speed rail history", UIC - International union of railways, 24 July 2015 (2015-07-24), pages 1-5, Retrieved from the Internet: URL:https://uic.org/passenger/highspeed/Hi gh-Speed-History
- EUDIER MICHEL: "La physique du frittage", Bulletin de la Societe frangaise de Mineralogie et de Cristallographie, vol. 77, no. 4-6, 1954, pages 1126-1142,
- Landolt-Börnstein: "9. Rail and other guided transport technologies, Sone S", Group VIII Advanced Materials and Technologies, 2002, DOI: 10.1007/10696439_46

## Description

### TECHNICAL FIELD

The present invention relates to a sintered friction material useful as a brake lining material and a disk brake pad material for use in a high-speed railway vehicle.

### BACKGROUND ART

Traveling at a speed higher than 300 km/h has been common in high-speed railways of the world, such as German ICE and French TGV. In Japan, each company of the Japan Railways Group has made great efforts to enhance a traveling speed of the Shinkansen. In order to enhance the traveling speed, brakes that can reliably stop even trains travelling at a high-speed are indispensable. Particularly in Japan where there are high risks of natural disasters such as earthquakes, it is essential to enhance performance and reliability of brakes to reliably stop trains in a short distance even when the regenerative brake system is out of function.

Various sintered materials are disclosed as materials for use in brake lining materials, disk brake pad materials, and others (see Patent Documents 1 to 8). Most of the conventional lining materials including metallic sintered materials are produced by adding hard particles (ceramics such as silica) to exert mechanical action (scratching action) and secure a sufficient coefficient of friction (referred as COF, µ), but some of conventional lining materials are produced by adding elements such as Fe in lining materials so as to enhance the coefficient of friction.

For example, Patent Document 7 discloses an invention directed to "a copper-based sintered friction material consisting of 55 to 80 wt% matrix metal and 20 to 45 wt% a filler component, such as lubricant and a friction adjusting material. The matrix metal comprises 0.5 to 15 wt% tin power, 0.1 to 30 wt% zinc powder, 5 to 25 wt% nickel power, 5 to 25 wt% iron powder, 0.1 to 20 wt% stainless steel powder, the balance comprising copper powder. Wherein
(1) total amount of the iron powder and the stainless steel powder is 8 to 28 wt%, and
(2) the iron powder is electrolytic iron powder whose particle diameter is within a range of 40 to 150 µm, and is subjected to heat treatment at 600 to 1200°C in a hydrogen gas or an ammonia gas (AX gas) atmosphere."

The invention disclosed in Patent Document 7 describes that if electrolytic iron powder and stainless steel powder are used in combination, the iron component works as a component that hinders sinterability, thereby causes cavities in the vicinity of the iron component of the matrix phase. The cavities react similarly with pores in a friction material, or a grinding material, and contribute to a stable friction during a hard-braking.

Patent Document 8 describes an invention directed to "a sintered friction-material consisting metallic matrix, a grinding material, and lubricant. The matrix comprises 25 to 50 vol% cast iron, and 1 to 7 vol% copper." In the invention of Patent Document 8, an Fe-based sintered material is used instead of a conventional Cu-based sintered material, thereby enhances a frictional property during braking at a high temperature.

### LIST OF PRIOR ART DOCUMENTS

Patent Document 1: JP60-106932A
Patent Document 2: JP63-109131A
Patent Document 3: JP2-10857A
Patent Document 4: JP3-68091A
Patent Document 5: JP6-45837A
Patent Document 6: JP7-65132A
Patent Document 7: JP2006-16680A
Patent Document 8: JP2007-126738A

US 3 191 278 A discloses a friction material composition comprising -in weight%- 50% to 80% copper; 5% to 15% graphite; up to 20% iron, preferably 9.5%; up to 6% molybdenum disulfide, preferably 4%; and up to 5% silica, preferably 3.5%.

US 2 408 430 A discloses a friction material composition comprising: -in weight%- 60% to 75% copper; 3-10% graphite; 4-10% iron; 3-12% molybdenum disulfide; and 2-7% silica.

US 2009/008210 A1 discloses a friction material composition for "modern drive trains" comprising -in weight%- 50.0% copper, 10.0% iron, 9.0% graphite, 4.5% molybdenum disulphide, and 1.5% silicon oxide.

### DISCLOSURE OF THE INVENTION

### PROBLEMS TO BE SOLVED BY THE INVENTION

Any composition and structure of a lining material were not designed based on the grasp of a sliding mechanism between a brake disk and a lining in none of the prior arts, in which designing has been done empirically. A mechanism of exerting braking power by a scratching action of hard particles doesn't seem to be applicable to the friction material design for high-speed railways running 350 km/h or higher, which generates a safety problem. In addition, it is supposed that larger braking power attained by the scratching action of hard particles requires a greater amount of hard particles, and results in a significant increase in production cost.

In the invention of Patent Document 7, as shown in Table 1 in Example, the Cu content doesn't exceed 41 mass% in the entire sintered material, and consequently sufficient thermal conductivity cannot be secured. In the invention of Patent Document 8, an Fe-based sintered material containing Fe more than Cu is used, and this material is similar to a material of a counter member, such as a brake disk; therefore the amount of wear by braking becomes extremely great.

An object of the present invention is to provide a sintered friction material for a high-speed railway having a high COF, and excellent wear resistance against a steel material of a counter member (e.g. brake disk).

### MEANS FOR SOLVING THE PROBLEMS

The present inventors have studied particularly on a sintered friction material included in lining used for a disk made of forged steel or cast steel. The present inventors have confirmed that in case a lining comprises Fe powder, the lining and the opposite disk adhere to each other through the reaction of Fe in both friction materials. That yields high COF. Such an effect that increases adhesion between the similar composition metals, or between eutectic metals during braking is well-known as the "similar-composition metal contact effect" in the tribology field, and is considered unfavorable for mechanical products because of seizure. On the other hand, it was found that Fe addition in a metal material increases COF. Such heavy friction raises the temperature during braking and deteriorates the wear resistance.

The present inventors have conducted various studies to solve the above conventional problems, and consequently have found that the addition of appropriate amount of Fe in a friction material increases COF properly and the adoption of Cu to the basic metallic phase prevents excessive increase in temperature caused by the Fe addition because of high thermal conductivity. That results in the enhancement of stability of braking power at a higher temperature.

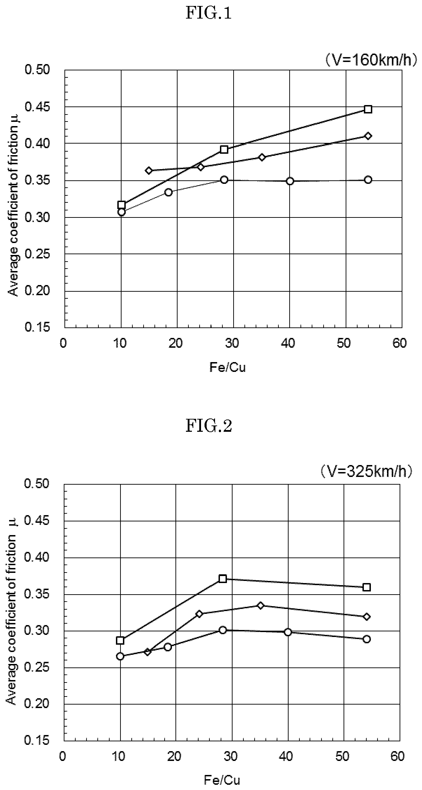

Figures 1, 2, and 3 disclosed in EXAMPLE 1 show relations between an average COF and an Fe/Cu value in braking test condition at 160, 325, and 360km/h respectively. In the figures, the symbols "○", "◇" and "□" show the data of materials sintered at 950, 1030 and 1030°C respectively. The chemical composition of the materials is shown in Table 1 of Examples described later.

As shown in Fig. 1, in case of the test at 160km/h, the average COF increased with an increase in the Fe/Cu value. As shown in Fig. 2, however, in case of the test at 325km/h, the average COF tends to be smaller when the Fe/Cu value becomes greater. As shown in Fig. 3, in case of the test at 365k/h, the average COF becomes significantly smaller in a region of the Fe/Cu value. As shown in the figures, it is understood that with an increase in Fe/Cu value the average COF increased at 160 km/h. But that with an increase in Fe/Cu value the average COF decreased at 350 km/h that is the expected maximum velocity of the futuristic high-speed railways. Consequently a too large Fe/Cu value rather deteriorates the average COF and results in the smaller braking power.

Based on the above findings the present invention has been done. The gist of the present invention is described by a disk brake pad material according to claim 1, and by a use of the sintered friction material for a disk brake pad according to claim 4.

### ADVANTAGEOUS EFFECTS OF INVENTION

The sintered friction material for a high-speed railway of the present invention exhibits large braking power and is excellent in stability of braking power at a high temperature. Accordingly, the sintered friction material for a high-speed railway of the present invention is suitable for brake lining for a high-speed railway in which the largest braking power is required among various transport vehicles, for example.

### BRIEF DESCRIPTION OF DRAWINGS

Figure 1 shows a relation between an average coefficient of friction and an Fe/Cu value in a test at 160 km/h.
Figure 2 shows a relation between the average coefficient of friction and the Fe/Cu value in a test at 325 km/h.

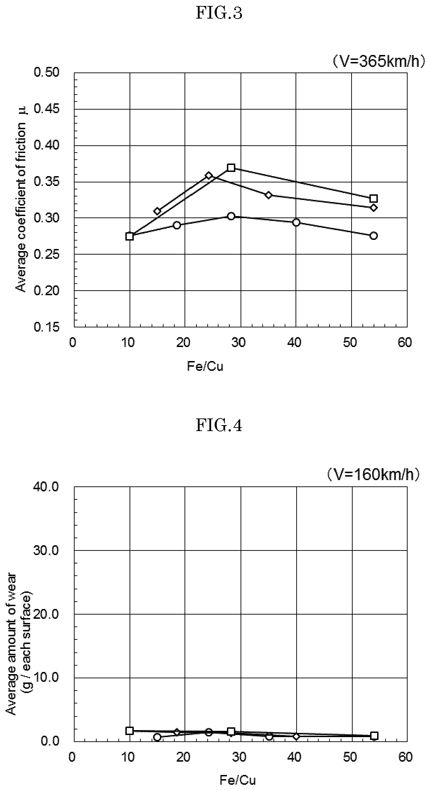

Figure 3 shows a relation between the average coefficient of friction and the Fe/Cu value in a test at 365 km/h.
Figure 4 show a relation between an average amount of wear and an Fe/Cu value in a test at 160 km/h.

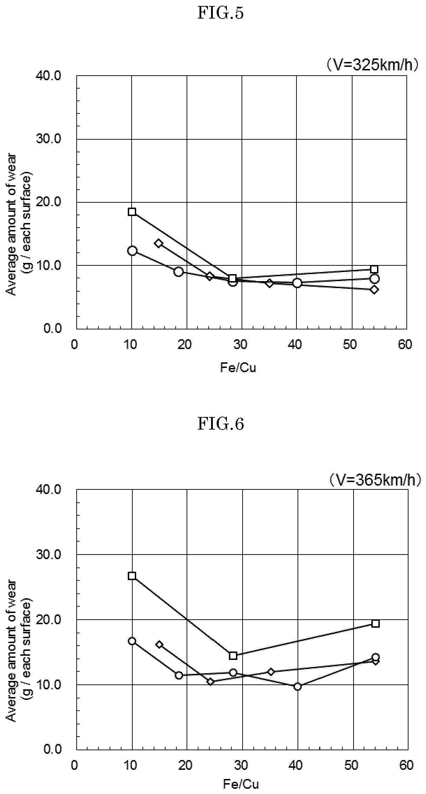

Figure 5 shows a relation between the average amount of wear and the Fe/Cu value in a test at 325 km/h.
Figure 6 shows a relation between the average amount of wear and the Fe/Cu value in a test at 365 km/h.

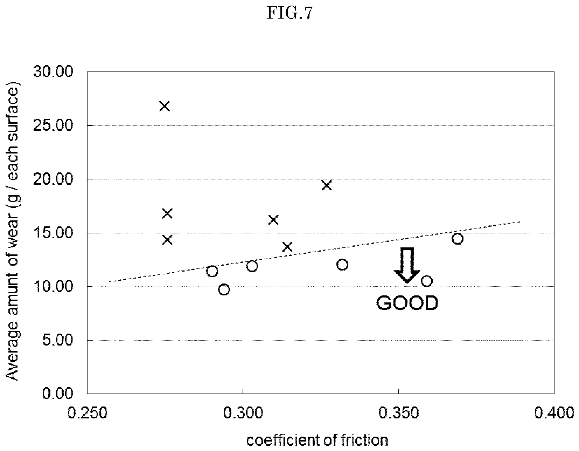

Figure 7 shows a relation between the average amount of wear and the average coefficient of friction in a test at 365 km/h.

### MODE FOR CARRYING OUT THE INVENTION

Hereinafter, a description will be provided on the embodiment of the present invention by using an example in which the sintered friction material of the present invention is applied to the brake lining. Every component contained in the sintered friction material relates to each other, and influences each other in its friction property; therefore, it is not always appropriate to individually discuss a reason for limiting each component, but a general reason for such limitation will be provided as follow. The percent sign "%" for each component denotes "mass %" in the following description.

### 1. Metal Material

### Cu: 50% or more

Cu is an element having high thermal conductivity, and serves as a base metal of the sintered friction material in the present invention. In order to obtain a Cu-based sintered body, the Cu content should be 50% or more. The upper limit of the Cu content may be defined in relation with additive components, and is not limited to specific one, but it is preferably 67% or less.

### Fe: 7.5% or more

Fe is an element exhibiting the most significant "similar-composition-metal contact effect" relative to a steel disk. In order to exert this effect, the Fe content should be 7.5% or more. The Fe content has no specific upper limit, but the excessive Fe content may deteriorate the wear resistance in case of the improper sintering temperature. Hence, it is preferable to set the Fe content to be 63% or less.

The insufficient Fe content in relation with the Cu content may provide an insufficient COF, or cause a deterioration of the wear resistance. Hence, the mass ratio between Fe and Cu (Fe/Cu) should be 0.15 or more. On the other hand, excessive Fe/Cu likely causes the dropout of Fe particles, which rather deteriorates the COF. Accordingly, Fe/Cu is set to be 0.40 or less. It is preferable to set Fe/Cu to be 0.36 or less.

In order to attain preferable sinterability, or to uniformly disperse Fe that dominates the friction force, Fe powder having a particle diameter of 45 µm or less is used as a raw material of the sintered friction material. Fe powder having a too small particle diameter increases its surface area per unit volume, so that the particles are likely to become agglomerated, which deteriorates both sinterability and uniform dispersion; thus it is preferable to set the particle diameter 5 µm or more.

In the invention described in Patent Document 7, Fe powder previously subjected to heat treatment in an atmosphere of hydrogen gas or ammonia gas (AX gas) is used, and the Fe powder treated in this manner hinders sinterability, as described in Patent Document 7. Accordingly, it is preferable to use mill scale powder as the Fe powder to be added as a raw material of the sintered friction material, rather than the Fe powder treated in this manner.

Any component may be employed in the metal matrix included in the sintered friction material as far as the component contains predetermined amount of Fe and Cu. For example, elements other than Fe and Cu, such as Cr and Mo, may further be contained in addition to Fe and Cu so as to enhance strength.

### 2. Other Additives

### Graphite: 5 to 15%

Graphite becomes useful for suppressing adhesion between a disk and a lining, and enhancing stabilization of the COF and the wear resistance if graphite is disposed between the disk and the lining. The graphite content should exceed 5% to attain this effect. On the other hand, the content thereof of more than 15% deteriorates material strength of the sintered body.

### Molybdenum disulfide: 0.3 to 7%

Molybdenum disulfide (MoS₂) is useful for stabilization of COF and enhancement of the wear resistance, as similar to graphite, and has effect of preventing a so-called "brake noise", and also has effect of providing lubricity in case of high load. These effects cannot be exerted if the MoS₂ content is less than 0.3%. The MoS₂ content of more than 7% significantly deteriorates the material strength of the sintered body, and hinders the wear resistance.

### Silica: 0.5 to 10%

Silica (SiO₂) is effective to remove an oxide film generated on a surface of the disk of the counter member by a so-called "scratching effect", and stably generate adhesion of Fe between the disk and the lining, thereby secure the friction force. The SiO₂ content of less than 0.5% attains no scratching effect, and the content thereof of more than 10% rather damages and roughens a surface of the disk.

The sintered friction material may include the above various components. Various components other than the aforementioned components that are usually added to the sintered friction material may also be contained. For example, a lubricant component such as tungsten disulfide, bismuth, and antimony, and a compound such as alumina, mullite, silicon nitride, and zircon sand may be contained. The sintered friction material of the present invention preferably has density of 4.6 or more so as to attain sufficient strength.

### 3. Producing Method of Sintered Friction Material

The sintered friction material of the present invention may be produced by a general producing method, for example, by mixing Fe powder and various additives with Cu powder, and compacting and sintering them. Instead of mixing Cu and Fe powders, Fe-Cu alloy powder produced by atomizing or the like may be used.

Adding Fe powder to Cu powder allows the Fe phase having a risk of increase in temperature during braking to be involved in the Cu phase exhibiting high thermal conductivity, so that it is possible to enhance stability of braking at a high temperature, and to reinforce the Cu phase at the same time, thereby enhancing the wear resistance.

In a lining for a high speed railway, a surface thereof becomes melted due to friction heat during braking. This means that the lining is heated approximately up to a melting point of Cu having the lowest melting point (1083°C) in the particles constituting the lining during braking. The wear characteristics of the sintered body is influenced by a neck strength of the sintered body, and if a difference in thermal expansion among the bound particles is large, the sintered body may be ruptured because of distortion caused by inhomogeneous thermal expansion. In the present invention, Fe particles and Cu particles that have large difference in thermal expansion (the coefficient of thermal expansion at a room temperature is 11.7 × 10⁻⁶ /°C for Fe, and 16.5 × 10⁻⁶ /°C for Cu) are used. Hence, it is effective to set the sintering temperature as close as possible to the melting point of Cu, and it is preferable to set this temperature at higher than 1000°C. This configuration allows the structure of the sintered body to withstand distortion caused by the thermal expansion during braking, thereby enhancing the wear resistance. Meanwhile, sintering at an excessively high temperature attains no effect commensurate with the cost. Accordingly, it is preferable to set the upper limit of the sintering temperature at 1083°C which does not exceed the melting point of Cu.

The produced sintered body is cut out in a predetermined size by common electrical discharge machining, and is mounted to a brake system so as to be used as brake lining.

### EXAMPLE 1

After mixing the raw material powders shown in Table 1, the materials were sintered by the process shown in Table 1. The strength, hardness, and density of each produced sintered friction material were measured with the following method. The result thereof is also described in Table 2. Of the raw material powder, CE-15 of Fukuda Metal Foil & Powder Co., LTD (electrolytic copper powder, maximum particle diameter of 75 µm) was used as Cu, ASC300 of Höganäs AB (mill scale powder, restored, maximum particle diameter of 45 µm) was used as Fe, CRE03PB of Japan Pure Chemical Co., Ltd. (maximum particle diameter of 63 µm) was used as Cr, MOE02PB of Japan Pure Chemical Co., Ltd. (maximum particle diameter of 63 µm) was used as Mo, SGP-100 of SEC Carbon Ltd. (flat artificial graphite, average particle diameter of 120 µm) was used as graphite, 010-51125 of Kishida Chemical Co., Ltd. was used as MoS₂, and SIO08PB of Japan Pure Chemical Co., Ltd. (average particle diameter of 4 µm) was used as SiO₂, respectively.

### <Strength>

In compliant with JIS R1601:2008, there were prepared test specimens shown in Figure 2 of "5.1 Shape and Dimension of Test Specimen" of "5. Test Specimen", and the strength was measured using a jig for the rotary three-point bending test shown in Figure 1a of "4.2 Test Jig" of "4. Apparatus and Implement".

### <Hardness>

Micro Vickers hardness (load of 50g, MHv of 50) was measured for the hardness. No measurement for the hardness was conducted on No. 2, and 4 specimens.

### <Density>

Measurement for the density was conducted with the Archimedes method.

Each measurement result is shown in Table 2

### [Table 1]

**Table 1**

| No. | Chemical composition (mass%) | | | | | | | Fe/Cu | Sintering temperature (°C) | remarks |
|---|---|---|---|---|---|---|---|---|---|---|
| | Cu | Fe | Cr | Mo | graphite | MoS₂ | SiO₂ | | | |
| 1 | 50.0 | 27.0 | 7.5 | 1.0 | 12.5 | 1.5 | 0.5 | 0.540 | 950 | Comparative Example |
| 2 | 55.0 | 22.0 | 7.5 | 1.0 | 12.5 | 1.5 | 0.5 | 0.400 | 950 | Comparative Examples |
| 3 | 60.0 | 17.0 | 7.5 | 1.0 | 12.5 | 1.5 | 0.5 | 0.280 | 950 | |
| 4 | 65.0 | 12.0 | 7.5 | 1.0 | 12.5 | 1.5 | 0.5 | 0.185 | 950 | |
| 5 | 70.0 | 7.0 | 7.5 | 1.0 | 12.5 | 1.5 | 0.5 | 0.100 | 950 | Comparative Example |
| 6 | 50.0 | 27.0 | 7.5 | 1.0 | 12.5 | 1.5 | 0.5 | 0.540 | 1,000 | Comparative Example |
| 7 | 57.0 | 20.0 | 7.5 | 1.0 | 12.5 | 1.5 | 0.5 | 0.351 | 1,000 | Comparative Examples |
| 8 | 62.0 | 15.0 | 7.5 | 1.0 | 12.5 | 1.5 | 0.5 | 0.242 | 1,000 | |
| 9 | 67.0 | 10.0 | 7.5 | 1.0 | 12.5 | 1.5 | 0.5 | 0.149 | 1,000 | Comparative Example |
| 10 | 50.0 | 27.0 | 7.5 | 1.0 | 12.5 | 1.5 | 0.5 | 0.540 | 1,030 | Comparative Example |
| 11 | 60.0 | 17.0 | 7.5 | 1.0 | 12.5 | 1.5 | 0.5 | 0.283 | 1,030 | Example of the present invention |
| 12 | 70.0 | 7.0 | 7.5 | 1.0 | 12.5 | 1.5 | 0.5 | 0.100 | 1,030 | Comparative Example |
| *means it does not meet the claimed range. | | | | | | | | | | |

### [Table 2]

**Table 2**

| No. | Bending Strength (MPa) | Hardness (MHv50) | Density (g/cm³) | remarks |
|---|---|---|---|---|
| 1 | 59.6 | 89.2 | 4.9 | Comparative Example |
| 2 | 68.3 | - | 4.9 | Comparative Examples |
| 3 | 66.6 | 87.8 | 4.8 | |
| 4 | 65.4 | - | 4.9 | |
| 5 | 74.0 | 87.6 | 4.9 | Comparative Example |
| 6 | 55.3 | 87.5 | 4.9 | Comparative Example |
| 7 | 62.4 | 85.5 | 4.9 | Comparative Examples |
| 8 | 67.5 | 86.9 | 5.0 | |
| 9 | 77.0 | 85.6 | 5.1 | Comparative Example |
| 10 | 37.1 | 86.3 | 4.9 | Comparative Example |
| 11 | 47.9 | 85.6 | 5.0 | Example of the present invention |
| 12 | 55.7 | 85.2 | 5.1 | Comparative Example |

The coefficient of friction and the amount of wear were measured on each sintered friction material in accordance with the following method.

### <Coefficient of Friction>

A bench test equipment with a brake disk (outer diameter of 400 mm, thickness of 20 mm, made of forged steel) which is half the size of an actual body (Shinkansen) was used. The test was conducted on each sintered friction material three times at initial speeds of 160, 325, and 365 km/h. Four pieces of the lining material (38 mm × 55 mm × 15 mm) cut out from each sintered friction material were rigidly fixed (nonisobaric structure) onto a surface of each caliper, that is, eight pieces of the lining material were fixed onto both surfaces of the calipers in total, and these pieces of the lining material were pushed with a load of 2.24kN (constant) against both surfaces of the disk at positions of 170 mm radially extending from a center of the disk, and in this state, torque was measured to calculate the COF (µ) for each sintered friction material; and each average value of the above three trials of the test is shown in Table 3. The amount of wear (g / each surface) for each sintered friction material was measured based on the difference in weight of the lining material before and after the test, and each average value of the above three trials of the test is also shown in Table 3. The relation between the average amount of wear and the average COF in the test at 365 km/h was evaluated. The result thereof is shown in table 3. The relation between the above results and the Fe/Cu value is shown in Figs. 1 to 7.

The target value for the average COF in the test at the initial speed of 365 km/h is 0.28 or more. In relation with the average COF, the target for the average amount of wear in the same test is required to satisfy the relation: M ≤ 38.2 × F + 0.345 (where "M" denotes the average amount of wear, and "F" denotes the average COF). A case of satisfying this relation is denoted by a symbol "○", and a case of unsatisfying this relation is denoted by a symbol "×". The above target value for the average amount of wear was defined based on the following: that if the average amount of wear is small, the pressing force (loading force) can be increased even with a small average COF, thereby securing sufficient braking power; and if the average COF is high although the amount of wear is large, sufficient braking power can be secured even with a small pressing force (loading force).

### [Table 3]

**Table 3**

| No. | Average coefficient of friction *µ* | | | Average amount of wear (g / each surface) | | | evaluation | remarks |
|---|---|---|---|---|---|---|---|---|
| | 160km/h | 325km/h | 365km/h | 160km/h | 325km/h | 365km/h | | |
| 1 | 0.351 | 0.289 | 0.276 | 0.78 | 8.00 | 14.30 | × | Comparative Example |
| 2 | 0.349 | 0.298 | 0.294 | 0.85 | 7.38 | 9.72 | ○ | Comparative Examples |
| 3 | 0.351 | 0.301 | 0.303 | 1.40 | 7.50 | 11.92 | ○ | |
| 4 | 0.334 | 0.278 | 0.290 | 1.50 | 9.10 | 11.43 | ○ | |
| 5 | 0.307 | 0.266 | 0.276 | 1.65 | 12.42 | 16.77 | × | Comparative Example |
| 6 | 0.411 | 0.320 | 0.315 | 0.79 | 6.22 | 13.65 | × | Comparative Example |
| 7 | 0.382 | 0.335 | 0.332 | 0.80 | 7.20 | 12.00 | ○ | Comparative Examples |
| 8 | 0.368 | 0.323 | 0.359 | 1.50 | 8.30 | 10.50 | ○ | |
| 9 | 0.364 | 0.271 | 0.310 | 0.70 | 13.50 | 16.20 | × | Comparative Example |
| 10 | 0.447 | 0.360 | 0.327 | 0.95 | 9.48 | 19.37 | × | Comparative Example |
| 11 | 0.392 | 0.371 | 0.369 | 1.53 | 8.05 | 14.45 | ○ | Example of the present invention |
| 12 | 0.317 | 0.287 | 0.275 | 1.65 | 18.45 | 26.75 | × | Comparative Example |

As shown in Table 3, and Figs. 1 to 7, in Inventive Example of the present invention (No. 11), a high average COF can be attained even at 365 km/h in each case, and sufficiently small average amount of wear can also be attained in relation with the average COF; thus such performance could be attained. That is preferable enough for use as the sintered friction material for a high-speed railway. On the contrary, Comparative Example (No. 1, 5, 6, 9, 10, and 12) could not be used as the sintered friction material for a high-speed railway because the average COFs were too small (No. 1, 5, and 12), or the average amounts of wear were too large (No. 6, 9, and 10).

### INDUSTRIAL APPLICABILITY

The sintered friction material of the present invention exhibits high braking power, and is excellent in stability of braking power at a high temperature. Accordingly, the sintered friction material of the present invention is suitable for a break lining of a high-speed railway in which the highest braking power is required among various transport vehicles, for example.

## Claims

1. A disk brake pad material made of a sintered friction material for a high-speed railway containing, by mass%, Fe of 7.5% or more, Cu of 50% or more, graphite of 5 to 15%, molybdenum disulfide of 0.3 to 7%, and silica of 0.5 to 10%, wherein Fe/Cu is 0.15 to 0.40,
wherein a relation between an average amount of wear M and an average coefficient of friction F of the sintered friction material satisfies a formula: M ≤ 38.2 × F+ 0.345 which is obtained by the wearing test having steps:
preparing four pairs of lining pieces each having a length of 55 mm, a width of 38 mm, and a thickness of 15 mm;
placing the four pairs of lining pieces on a brake disk made of forged steel having an outer diameter of 400 mm, and a thickness of 20 mm, where the four pairs of the lining pieces are placed at positions of 170 mm radially extending from a center of the brake disk with constant intervals in a rotational axial direction of the brake disk; and
impressing the four pairs of the lining pieces onto both surfaces of the brake disk with a load of 2.24 kN so as to brake a wheel rotating at an initial speed of 365 km/h,
wherein the sintered friction material is sintered at a temperature of higher than 1000°C, and
wherein Fe powder having a particle diameter of 45 µm or less is used as a raw material of the sintered friction material.

2. The disk brake pad material for a high-speed railway according to claim 1, wherein mill scale powder is used as Fe powder.

3. The disk brake pad material for a high-speed railway according to claim 1 or 2, wherein the sintered friction material has a density of 4.6 or more.

4. Use of the sintered friction material for a disk brake pad according to any one of the preceding claims for a high-speed railway traveling at a speed higher than 300 km/h.

## Patentansprüche

1. Scheibenbremsenbelagmaterial aus Sinterreibwerkstoff für eine Hochgeschwindigkeitseisenbahn, das in Masse-% besteht aus 7,5 % oder mehr an Fe, 50 % oder mehr an Cu, 5 bis 15 % an Graphit, 0,3 bis 7 % an Molybdändisulfid, 0,5 bis 10 % an Siliciumdioxid, wobei es sich bei Fe/Cu um 0,15 bis 0,40 handelt,
wobei ein Verhältnis zwischen einem durchschnittlichen Verschleißbetrag M und einem durchschnittlichen Reibungskoeffizienten F des Sinterreibwerkstoffs eine Formel: M ≤ 38,2 x F + 0,345 erfüllt, die durch einen Verschleißversuch mit folgenden Schritten erhalten wird:
Vorbereiten von vier Paaren von Auskleidungsstücken, die jeweils eine Länge von 55 mm, eine Breite von 38 mm und eine Dicke von 15 mm haben;
Ansetzen der vier Paare von Auskleidungsstücken an eine aus geschmiedetem Stahl hergestellte Bremsscheibe, die einen Außendurchmesser von 400 mm und eine Dicke von 20 mm hat, wobei die vier Paare der Auskleidungsstücke an Stellen, die sich 170 mm von einer Mitte der Bremsscheibe radial erstrecken, mit konstanten Zwischenräumen in einer axialen Drehrichtung der Bremsscheibe angesetzt werden; und
Andrücken der vier Paare der Auskleidungsstücke auf beide Oberflächen der Bremsscheibe mit einer Belastung von 2,24 kN, um ein Rad zu bremsen, das sich mit einer Anfangsgeschwindigkeit von 365 km/h dreht,
wobei der Sinterreibwerkstoff bei einer Temperatur von über 1000°C gesintert ist, und
wobei Fe-Pulver mit einem Partikeldurchmesser von 45 µm oder weniger als Rohmaterial für den Sinterreibwerkstoff verwendet wird.

2. Scheibenbremsenbelagmaterial für eine Hochgeschwindigkeitseisenbahn nach Anspruch 1, wobei Walzzunderpulver als Fe-Pulver verwendet wird.

3. Scheibenbremsenbelagmaterial für eine Hochgeschwindigkeitseisenbahn nach Anspruch 1 oder 2, wobei der Sinterreibwerkstoff eine Dichte von 4,6 oder mehr hat.

4. Verwendung des Sinterreibwerkstoffs für einen Scheibenbremsenbelag nach einem der vorhergehenden Ansprüche für eine Hochgeschwindigkeitseisenbahn, die mit einer Geshwindigkeit von über 300 km/h fährt.

## Revendications

1. Matériau de plaquette de frein à disque constitué d'un matériau de frottement fritté pour une voie ferrée à grande vitesse contenant, en % en masse, Fe de 7,5 % ou plus, Cu de 50 % ou plus, graphite de 5 à 15 %, disulfure de molybdène de 0,3 à 7 %, et silice de 0,5 à 10 %, dans lequel Fe/Cu est de 0,15 à 0,40,
dans lequel une relation entre une quantité moyenne d'usure M et un coefficient de frottement moyen F du matériau de frottement fritté satisfait à une formule : M ≤ 38,2 x F + 0,345 qui est obtenu par l'essai d'usure comportant les étapes de :
préparation de quatre paires de pièces de garniture ayant chacune une longueur de 55 mm, une largeur de 38 mm, et une épaisseur de 15 mm ;
placement des quatre paires de pièces de garniture sur un disque de frein constitué d'acier forgé ayant un diamètre externe de 400 mm, et une épaisseur de 20 mm, où les quatre paires des pièces de garniture sont placées aux positions de 170 mm s'étendant radialement depuis un centre du disque de frein avec des intervalles constants dans une direction axiale de rotation du disque de frein ; et
impression des quatre paires des pièces de garniture sur les deux surfaces du disque de frein avec une charge de 2,24 kN de façon à freiner une roue tournant à une vitesse initiale de 365 km/h,
dans lequel le matériau de frottement fritté est fritté à une température supérieure à 1000°C, et
dans lequel une poudre de Fe ayant un diamètre de particule de 45 µm ou moins est utilisée comme matière première du matériau de frottement fritté.

2. Matériau de plaquette de frein à disque pour une voie ferrée à grande vitesse selon la revendication 1, dans lequel de la poudre de calamine est utilisée en tant que poudre de Fe.

3. Matériau de plaquette de frein à disque pour une voie ferrée à grande vitesse selon la revendication 1 ou 2, dans lequel le matériau de frottement fritté a une densité de 4,6 ou plus.

4. Utilisation du matériau de frottement fritté pour une plaquette de frein à disque selon l'une quelconque des revendications précédentes pour une voie ferrée à grande vitesse se déplaçant à une vitesse supérieure à 300 km/h.
